# EUROPEAN PATENT APPLICATION

(11) **EP 4 434 741 A1**
(43) Date of publication of application: **25.09.2024**
(21) Application number: 24162057.4
(22) Date of filing: 07.03.2024
(51) Int. Cl.: B32B 3/06, B32B 3/26, B32B 11/04, B32B 15/085, B32B 27/32, B32B 11/08, E04D 13/04, E04D 13/14

(54) **A SEALING DEVICE FOR INCORPORATION INTO A ROOF STRUCTURE, A METHOD OF MANUFACTURING THE SEALING DEVICE, AND A USE OF A FOIL OF ETHYLENE COPOLYMER BITUMEN (ECB)**

(30) Priority: 21.03.2023 DK PA202300261
(71) Applicant: JUAL Group A/S, 7130 Juelsminde (DK)
(72) Inventor: OLSEN, Martin Weber, 8700 Horsens (DK); JØRGENSEN, Jacob Kjær, 8520 Lystrup (DK)
(74) Representative: Zacco Denmark A/S

(57) **Abstract**

The present invention relates to sealing device (1) for installation in a roof (2), to form part of a vent (5) or a rain water drainage (6), the sealing device (1) comprising a bituminous membrane (10) having a perimeter (11), a first surface (12), an opposite second surface (14) and a through-going aperture (16), a foil (20) of ethylene copolymer bitumen (ECB) having a perimeter (21), a first surface (22), an opposite second surface (24) and a through-going opening (26) aligned with said through-going aperture (16) of said bituminous membrane (10), said foil (20) being fused to said bituminous membrane (10), a metal sheet (30) having a perimeter (31), a first surface (32), an opposite second surface (34) and a through-going aperture (36) aligned with said through going aperture (16) of said bituminous membrane (10), said foil (20) being fused to said metal sheet (30), and a metal collar (40) including i) a first portion (47) contacting said first surface (12) of said bituminous membrane (10) along the periphery (17) of said through-going aperture (16) of said bituminous membrane (10) and ii) a second portion (48) extending through said through-going apertures (16, 26, 36), preferably contacting said metal sheet (30).

## Description

The present invention relates to sealing devices for incorporation into a roof structure, in particular for forming a leakage proof transition between a roofing membrane and a duct, such as a venting pipe or a rainwater discharge pipe. Such sealing devices are well-known in the art, see eg. DE 20103721, EP 2395173, EP 1710365, US 5618416 and JP 200924490.

One known sealing device, known as the Jual^{™} Roof Outlet, includes a layered structure comprising a piece of a bituminous membrane having a lower surface adhered, using an asphalt primer, to an upper surface of a metal sheet/plate, and is configured to be attached to a venting pipe or to a rainwater discharge pipe. A metal collar of the device has one portion contacting the upper surface of the bituminous membrane and a second portion extending through a through-going aperture formed in the bituminous membrane and the metal sheet. The metal sheet has openings for securing the sealing device to the roof structure, such as by screws. When installing this sealing device a workman will flip back a peripheral portion of the piece of the bituminous membrane to access the openings for the securing, then fold the peripheral portion back to lie flatly against the roofing membrane, at which point a welding torch is applied to weld the piece of the bituminous membrane to the roofing membrane, to complete the installation. Typically, the metal sheet has dimensions in the order of 25cm by 25cm, and the piece of the bituminous membrane has dimensions in the order of 100cm by 100cm.

For new and future applications it has been found desirous to improve the bond between the aforementioned metal sheet and the piece of a bituminous membrane since any failure of this bond occurring over time and under certain loads and deformations may result in water seeping into the roof structure along a path between the metal sheet and the piece of the bituminous membrane. The present invention solves this problem by using a piece of a foil of Ethylene Copolymer Bitumen (ECB) for bonding the piece of bituminous membrane to the metal sheet. Thus, the invention provides a novel sealing device as defined in claim 1, a method for manufacturing the novel sealing device, as defined in claim 13, and more generally the use of a piece of a foil of Ethylene Copolymer Bitumen (ECB) defined in claim 21.

Specifically, the invention provides a sealing device for installation in a roof, to form part of a vent or of a rain water drainage, the sealing device comprising a bituminous membrane having a perimeter, a first surface, an opposite second surface and a through-going aperture, a foil of Ethylene Copolymer Bitumen (ECB) having a perimeter, a first surface, an opposite second surface and a through-going opening aligned with the through-going aperture of the bituminous membrane, the foil being fused to the bituminous membrane, a metal sheet having a perimeter, a first surface, an opposite second surface and a through-going aperture that is aligned with the through going aperture of the bituminous membrane, the foil being fused to the metal sheet, and a metal collar including i) a first portion contacting the first surface of the bituminous membrane along or near the periphery of the through-going aperture of the bituminous membrane and ii) a second portion extending through the aforementioned through-going apertures, preferably contacting the metal sheet. The first portion of the collar may be annular/ring-shaped or may have a polygonal perimeter, i.e. a rectangular outline.

Ethylene Copolymer Bitumen (ECB)-foils are made from compositions containing primarily bitumen and an ethylene copolymer. Preferably, use is made of a copolymer of ethylene and ethyl acrylate or butyl acrylate, wherein a composition for making the ECB foil may preferably comprise 25-125 parts by weight of bitumen and 5-100 parts by weight of the copolymer, such as 10-40 parts by weight of the copolymer, preferably 100 parts by weight of the copolymer.

ECB-foils are known to have excellent properties when used for roof covering, see eg. DE3534076 which discloses a foil made from a copolymer of ethylene and butyl acrylate. Examples of compositions for making an ECB foil are disclosed in EP 130367, EP 223019 and US3249567. The Köster ECB 2.0 U S ECB-foil, which can be welded within a temperature window of 350°C to 650°C, has been found useful in having very good mechanical properties as such.

By the terms "fused" and "directly" as used herein is meant a direct bond established using thermal energy, optionally in combination with a pressure, with no addition having been made, when the sealing device is manufactured, of any dedicated adhesive layer between the opposed surfaces of the ECB foil and the bituminous membrane and between the opposed surfaces of the ECB foil and the metal sheet. The bond between the ECB foil and the metal sheet may be seen as an adhesive bond, whereas the bond between the ECB sheet and the bituminous membrane may be seen as a bond resulting from the material of the ECB sheet and that of the bituminous membrane flowing together by the heating, as may even be the case where the bituminous membrane includes, as is conventional for bituminous roof covering membranes, a protective polyethylene film lining, which lining is degraded by the heating, whereby the foil of ethylene copolymer bitumen (ECB) is fused to the bituminous membrane by migration when the plastic material film layer has degraded as a consequence of the heating.

In an embodiment the piece of the bituminous membrane preferably may comprise a reinforcing carrier web impregnated with bitumen, and the bitumen may preferably be a SBS- or APP-modified bitumen. Using dimensions as particularly claimed herein has been seen to provide highly advantageous properties of the sealing device.

The invention will now be explained in more detail by reference to embodiments.

### Brief description of the drawings

Fig. 1 is a perspective view showing a building roof,
Fig. 2a is a perspective top view of an embodiment of a device according to the invention, at an initial step of the installation thereof for incorporation into a roof structure,
Fig. 2b is a perspective bottom view of the device of fig. 2a,
Fig. 2c is a perspective rear view showing a variant of the device of fig. 2a,
Fig. 3 is a cross-sectional view of the device of fig. 2a,
Fig. 4 is a cross-sectional view of the device of fig. 3, during manufacture thereof using a press shown also in a cross-sectional view,
Figs. 5a and 5b illustrate further steps performed for completion of the installation of the device, and

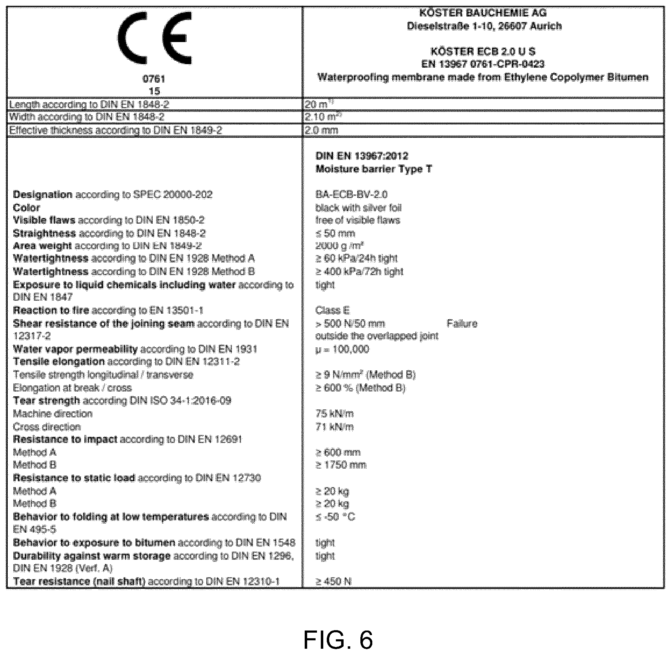

Fig. 6 lists properties of a Köster ECB 2.0 U S ECB-foil which has been found particularly useful in the present invention.

### Detailed description

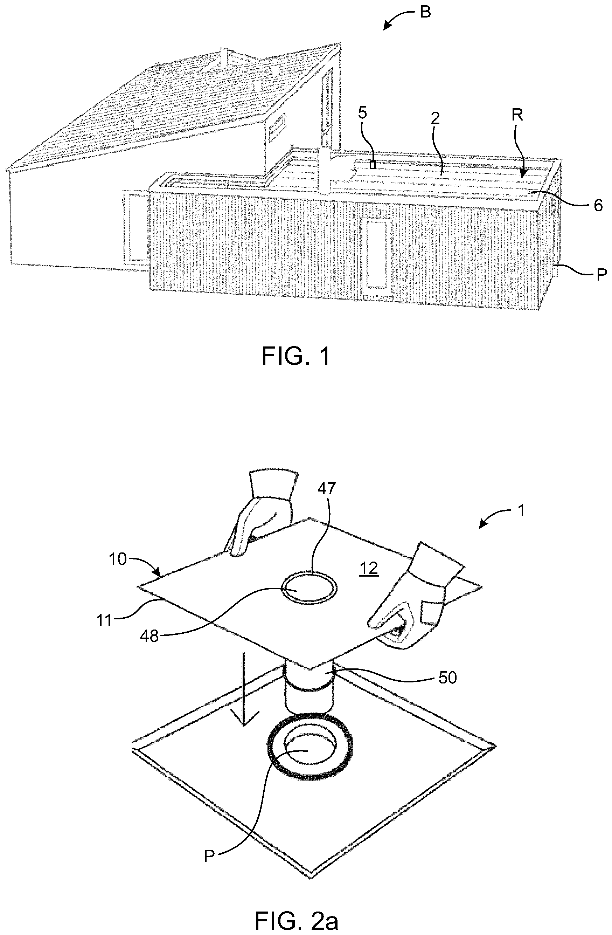

Figure 1a shows a building B with a flat roof structure R covered by a bituminous roofing membrane 2 and having a drain gully 6 connected to a downpipe P for rain water drainage and a vent 5 connected to a pipe (not shown) defining a ventilation duct.

Forming such a drain gully 6 and such a vent 5 requires a local penetration of the roof structure R, which involves the risk that water may seep into the building B at the hole where the penetration has been made. To reduce or eliminate this risk, it is conventional to install a prefabricated sealing device at the hole, where the sealing device includes a short cylindrical metal duct that is connected to the aforementioned pipe. Such sealing devices, such as the aforementioned Jual^{™} Roof Outlet, often include a piece of a flexible bituminous membrane bonded to a metal sheet or plate, which sheet or plate or secured to the roof structure R. To finalise the installation is the piece of the flexible bituminous membrane welded to a portion of the upper surface of the bituminous roofing membrane 2 around the hole. When connected to a ventilation pipe a hood may then be applied for preventing entry of rain water into the ventilation pipe.

Fig. 2a shows general features of the sealing device 1 of the present invention, which shown general features are also in the prior art Jual^{™} Roof Outlet. The sealing device 1 comprises a piece of a bituminous membrane 10 having a perimeter 11, a first or upper surface 12, and a through-going central aperture at which is arranged a metal collar that includes an annular first portion 47, which contacts the first surface 12 of the piece of a bituminous membrane 10 along the periphery of the through-going aperture, and a second portion 48 that extends through the through-going aperture. The bituminous membrane 10 may include a layer of sand defining the first surface 12 and be of a conventional type supplied with a protective plastic material film lining, such as a polyethylene film.

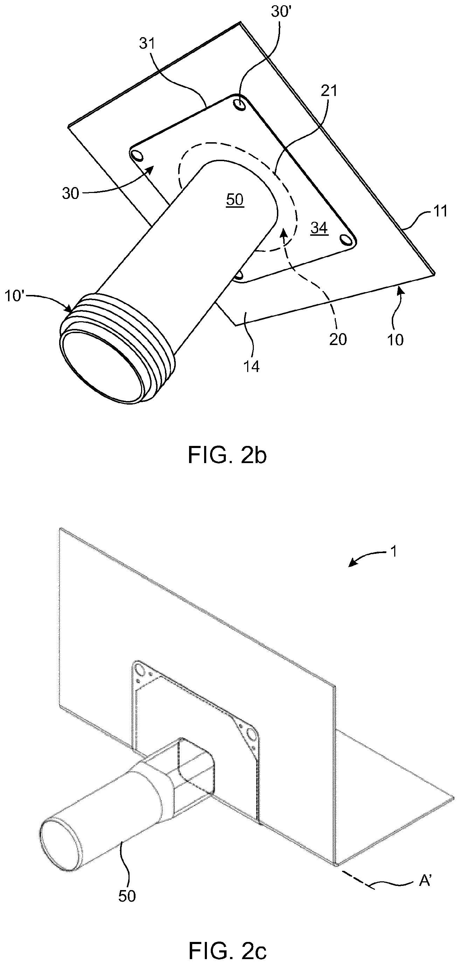

Fig. 2b shows the sealing device 1 of fig. 2a seen from below, with a coupling element 10' that is mounted to the end of a short cylindrical duct 50, to allow for a connection of the sealing device 1 to the venting pipe or rainwater discharge pipe P of the building B. The short cylindrical duct 50 of the device 1 is connected to or integral with a metal sheet 30 that has a perimeter 31, a first surface, an opposite second surface 34 and a through-going aperture that is aligned with the through going aperture of the piece of the bituminous membrane 10.

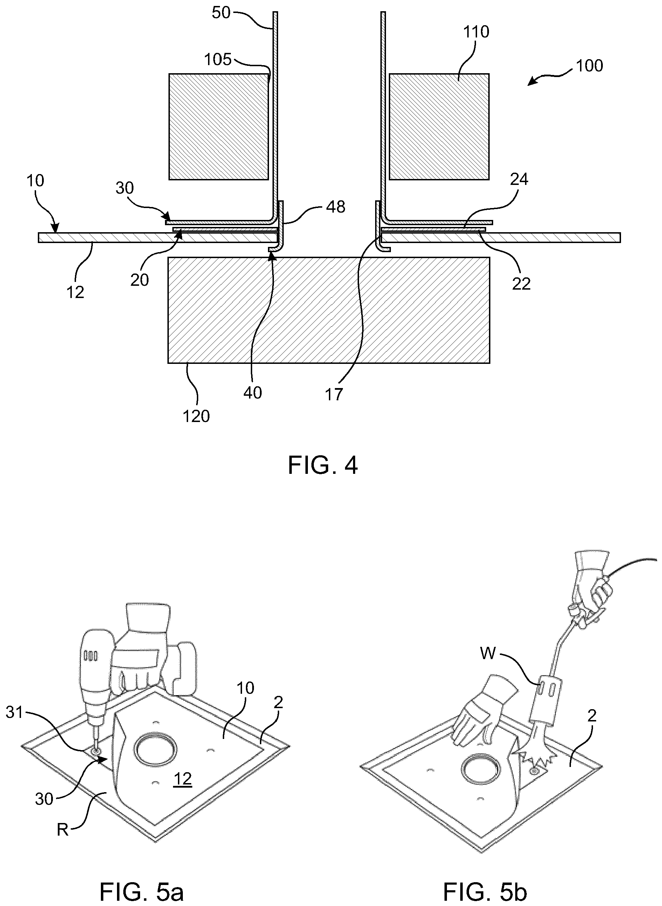

The first surface of the metal sheet 30 is bonded to a lower or second surface of a piece of a foil 20 of ethylene copolymer bitumen (ECB) that has a perimeter 21 outlined in broken line in fig. 2b. The metal sheet 30 moreover has a number of through-going holes 30' arranged along the perimeter 31 and used for securing the sealing device 1 to the roof structure R, as will be explained briefly later with reference to fig. 5a.

Fig. 2c shows a variant where the device 1 of fig. 2a has been bent along line A', whereby the shown device 1 may be used for horizontal discharge of rainwater from the roof structure R. The metal collar 40 and the metal duct 50 have a square outline in contrast to the collar 40 and metal duct 50 of the embodiment of fig. 1a.

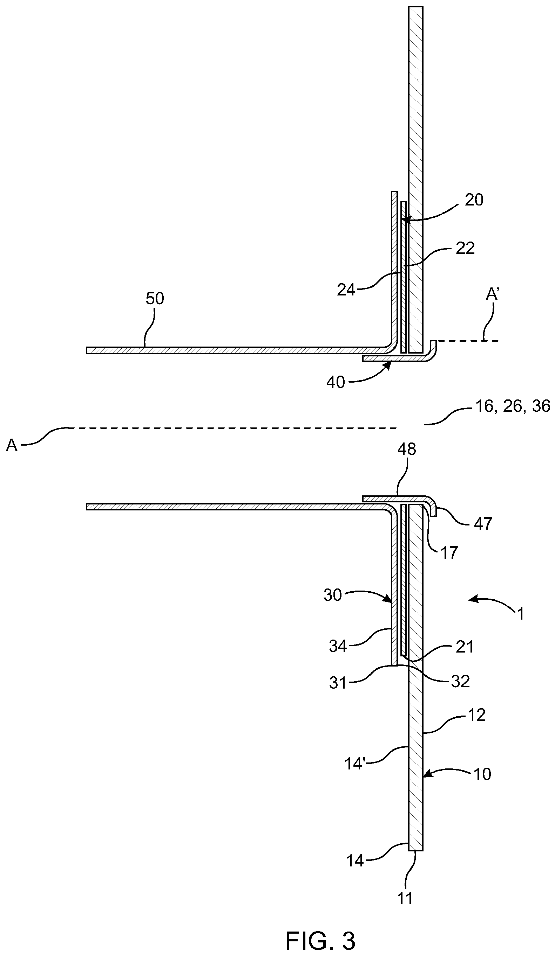

Turning now to fig. 3 the structure of the sealing device 1 will be explained further. For illustrative purposes the various elements 10, 20, 30 of the sealing device 1 are shown spaced slightly apart in the direction of the line A but as will be understood the elements 10, 20, 30 are in fact bonded to each other.

Starting from the top, the sealing device 1 has the piece of a bituminous membrane 10 with a perimeter 11, a first, upper surface 12, an opposite second surface 14 (on which there may along the periphery 11 remain portions of the aforementioned protective lining 14') and a through-going aperture 16. Next there is a piece of a foil 20 of ethylene copolymer bitumen (ECB) that has a perimeter 21, a first, upper surface 22, an opposite second surface 24 and a through-going opening 26 that is aligned with the through-going aperture 16 of the bituminous membrane 10. The foil 20 is bonded to the bituminous membrane 10.

Next is the metal sheet 30 that has perimeter 31, a first, upper surface 32, an opposite second surface 34 and a through-going aperture 36 that is aligned with the through going aperture 16 of the bituminous membrane 10. The foil 20 is bonded to the metal sheet 30.

The device 1 also includes a metal collar 40, preferably of stainless steel, which collar 40 includes i) the aforementioned first portion 47 that contacts the first, upper surface 12 of the bituminous membrane 10 along the periphery 17 of the through-going aperture 16 of the piece of a bituminous membrane 10 and ii) a second portion 48 that extends through all of the aforementioned three through-going apertures 16, 26, 36, preferably in a press-fitting engagement with the metal sheet 30 along the perimeter of the through going-aperture of the metal sheet 30 or connected, such as by spot-welding, to the inside of the shown short cylindrical duct 50, that may be connected to or integral with the metal sheet 30. A sealing material (not shown) is preferably applied to the second portion 48 to provide additional safety against water ingress. As may be understood, the piece of the bituminous membrane 10 and the foil 20 are sandwiched between the first portion 47 of the collar 40 and the metal sheet 30 at or along the perimeter of their respective through-going apertures 16, 26.

Where the metal collar 40 and/or the first portion 47 thereof has ring-shaped outline as shown in fig. 2a the aforementioned through-going apertures 16, 26 preferably have a circular perimeter whereas the through-going apertures 16, 26 preferably have a polygonal perimeter where the metal collar 40 and/or the first portion 47 have a polygonal outline as shown in fig. 2c.

It has been found preferable to use a piece of a bituminous membrane 10 having a thickness in the range of 2mm-6mm, preferably 2.4mm-5mm, a piece of a foil 20 of ethylene copolymer bitumen (ECB) having a thickness in the range of 2mm-6mm, preferably 2.4mm-5mm, and a metal sheet (30) having a thickness in the range of 0.5-1.2mm.

As may be seen, the perimeter 11 of the bituminous membrane 10 extends beyond the perimeter 31 of the metal sheet 30, and the perimeter 31 of the metal sheet 30 extends beyond the perimeter 21 of the foil 20, to allow for installation of the device 1 in a conventional manner following the steps shown in figs. 2a, 5a and 5b where the duct 50 is first inserted into a venting pipe P or a rainwater discharge pipe P. A workman then flips back a perimeter portion of the piece of the bituminous membrane 10 to expose the openings 30' for applying securing screws to secure the metal sheet 30 to the roof structure R, as shown in fig. 5a, then folds the perimeter portion back to lie flatly against the roofing membrane 2, at which point a welding torch W is applied to weld the piece of the bituminous membrane 10 to the roofing membrane 2, to complete the installation.

Turning now to fig. 4 a method of making the sealing device 1 will now be explained. As a first step, the metal sheet 30, the foil 20, the piece of membrane 10 and the collar 40 are positioned on top of each other in the order described above in a press 100 having a first, heatable plate-shaped part 110 arranged vertically above a second plate-shaped part 120, with the metal sheet 30 being arranged closer to the first part 110 than the bituminous membrane 10. Using this order and with the hotter heatable part 110 arranged above the second part 120, any excess molten parts of the foil 20 will flow outwards, perpendicular to line A, away from the collar 40 and not towards and into the hotter first part 110 of the press 100.

The press 100 is then activated to press the foil 20 into contact with the piece of the bituminous membrane 10 and with the foil 20 of ethylene copolymer bitumen (ECB) while heating the first heatable part 110 to thermally bond the foil 20 of ethylene copolymer bitumen (ECB) directly to the piece of bituminous membrane 10 and directly to the metal sheet 30. The first part 110 of the press 100 is preferably heated to a temperature of 250°C-500°C, and the pressing maintained for 5-15 seconds, and/or the foil 20 of ethylene copolymer bitumen (ECB) is preferably heated by the press 100 to a temperature of 250°C-500°C, preferably around 400°C or a temperature within the welding range of the ECB-foil 20. The second part 120 of the press 100 may be heated/heatable to a relatively low temperature, such as 30°C-50°C.

In one operation, the process involves the steps of maintaining, during the heating, the pressing at high pressure, such as for about 8 seconds, and then at a reduced pressure, such as for about 5 seconds. Then, heating may be stopped to reduce the temperature of the foil 20 of ethylene copolymer bitumen (ECB), the pressure then further reduced and, after about 10-20 seconds, preferably around 15 seconds, the pressure may be then increased to a pressure above the aforementioned reduced pressure.

As shown, the first part 110 of the press 100 preferably includes a central aperture 105 for receiving the second portion 48 of the metal collar 40 during the pressing.

Tests performed to test development of bonding strength over time using a sample of an Icopal^{®} base 500pg bitumen membrane bonded to a metal sheet via a 0.8mm Köster ECB 2.0 U S ECB-foil, compared to a similar sample where the bond is established by a conventional adhesive (an asphalt primer), shows bond failure of the latter sample subjected to a peel force of 25N at 20°C after 24 hours, and no failure of the former sample.

As may be understood the invention relates generally to the finding that use may be made of a piece of a foil of ethylene copolymer bitumen (ECB) as an interface for the bonding of a bituminous membrane to a metal sheet by heating, wherein the bond between the ECB foil and the metal sheet may be seen as an adhesive bond, whereas the bond between the ECB sheet and the bituminous membrane may be seen as a bond resulting from the material of the ECB sheet and that of the bituminous membrane flowing together by the heating.

## Claims

1. A sealing device (1) for installation in a roof structure (R), to form part of a vent (5) or a rain water drainage (6), the sealing device (1) comprising:
- a bituminous membrane (10) having a perimeter (11), a first surface (12), an opposite second surface (14) and a through-going aperture (16),
- a foil (20) of ethylene copolymer bitumen (ECB) having a perimeter (21), a first surface (22), an opposite second surface (24) and a through-going opening (26) aligned with said through-going aperture (16) of said bituminous membrane (10), said foil (20) being fused to said bituminous membrane (10),
- a metal sheet (30) having a perimeter (31), a first surface (32), an opposite second surface (34) and a through-going aperture (36) aligned with said through going aperture (16) of said bituminous membrane (10), said foil (20) being fused to said metal sheet (30), and
- a metal collar (40) including i) a first portion (47) contacting said first surface (12) of said bituminous membrane (10) along the periphery (17) of said through-going aperture (16) of said bituminous membrane (10) and ii) a second portion (48) extending through said through-going apertures (16, 26, 36), preferably contacting said metal sheet (30).

2. The device (1) of claim 1, said perimeter (11) of said bituminous membrane (10) extending beyond said perimeter (31) of said metal sheet (30), and said perimeter (31) of said metal sheet (30) extending beyond said perimeter (21) of said foil (20).

3. The device according to the previous claim, said metal sheet (30) including along said perimeter (31) thereof a plurality of through-going holes (30'), preferably accessible by folding a portion of said bituminous membrane (10) away from said metal sheet (30).

4. The device (1) according to any of the previous claims, said bituminous membrane (10) including a layer of sand defining said first surface (12) thereof.

5. The device (1) according to any of the previous claims, said second portion (48) of said metal collar (40) being secured to said metal sheet (30) by press-fitting.

6. The device (1) according to any of the previous claims 1-4, said metal sheet (30) being connected to a tubular metal duct (50) extending in a direction away from said metal collar (40), said second portion (48) of said metal collar (40) preferably being secured to said tubular metal duct (50), such as by press-fitting or welding.

7. The device (1) according to any of the previous claims, said bituminous membrane (10) including a plastic material film layer (14'), such as a polyethylene film layer (14'), said foil (20) of ethylene copolymer bitumen (ECB) being fused to said bituminous membrane (10) after degradation of said plastic material film layer (14').

8. The device (1) according to any of the previous claims, said bituminous membrane (10) comprising a reinforcing carrier web impregnated with bitumen, preferably a SBS- or APP-modified bitumen.

9. The device (1) according to any of the previous claims, said metal being stainless steel.

10. The device (1) according to any of the previous claims,
- said bituminous membrane (10) having a thickness in the range of 2mm-6mm, preferably 2.4mm-5mm, and/or
- said foil (20) of ethylene copolymer bitumen (ECB) having a thickness in the range of 2mm-6mm, preferably 2.4mm-5mm, and/or
- said metal sheet (30) having a thickness in the range of 0.5-1.2mm.

11. The device (1) according to any of the previous claims, said foil (20) of ethylene copolymer bitumen (ECB) being i) unreinforced and/or ii) a single layer foil (20) of ethylene copolymer bitumen (ECB).

12. The device (1) according to any of the previous claims, said first portion (47) of said metal collar (40) being ring-shaped or having a rectangular or polygonal shape.

13. A method of making a sealing device (1) for installation in a roof structure (R), in particular to form part of a vent (5) or a rain water drainage (6), comprising the steps of:
- providing a press (100) having a first heatable part (110) and an opposite second part (120),
- arranging between said first and second parts (110, 120)
i) a bituminous membrane (10) having a perimeter (11), a first surface (12), an opposite second surface (14) and a through-going opening (16),
ii) next to said bituminous membrane (10) a foil (20) of ethylene copolymer bitumen (ECB) having a perimeter (21), a first surface (22), an opposite second surface (24) and a through-going opening (26) aligned with said through-going aperture (16) of said bituminous membrane (10), and
iii) next to said foil (20) of ethylene copolymer bitumen (ECB) a metal sheet (30) having a perimeter (31), a first surface (32), an opposite second surface (34) and a through-going aperture (36) aligned with said through going aperture (16) of said bituminous membrane (10), and
- activating said press (100) to press said foil (20) in contact with said bituminous membrane (10) and with said foil (20) of ethylene copolymer bitumen (ECB) while heating said first heatable part (110) to thermally bond said foil (20) of ethylene copolymer bitumen (ECB) directly to said bituminous membrane (10) and said metal sheet (30).

14. The method according to claim 13, said first part (110) being heated to a temperature of 250°C-500°C, and said pressing maintained for 5-15 seconds, and/or said foil (20) of ethylene copolymer bitumen (ECB) being heated by said press (100) to a temperature of 250°C-500°C, preferably around 400°C.

15. The method according to the previous claim, comprising the steps of maintaining, during said heating, said pressing at high pressure, such as for about 8 seconds, and then at reduced pressure, such as for about 5 seconds.

16. The method according to the previous claim, comprising the subsequent steps of stopping said heating to reduce the temperature of said foil (20) of ethylene copolymer bitumen (ECB), further reducing said pressure and, after about 10-20 seconds, preferably around 15 seconds, increasing said pressure to above said reduced pressure.

17. The method according to any of the previous claims 13-16, said first part (110) being arranged vertically above said second part (120), said metal sheet (30) being arranged closer to said first part (110) than said bituminous membrane (10).

18. The method according to any of the previous claims 13-17, a metal collar (40) including i) a first portion (47) contacting said first surface (12) of said bituminous membrane (10) along the periphery (17) of said through-going aperture (16) of said bituminous membrane (10) and ii) a second portion (48) extending through said through-going apertures (16, 26, 36), preferably to contact said metal sheet (30), said first part (110) of said press (100) preferably including an aperture (105) for receiving said second portion (48) of said metal collar (40).

19. The method according to any of the previous claims 13-18, said bituminous membrane (10) comprising a reinforcing carrier web impregnated with bitumen, preferably a SBS- or APP-modified bitumen.

20. The method according to any of the previous claims 13-19,
- said bituminous membrane (10) having a thickness in the range of 2mm-6mm, preferably 2.4mm-5mm, and/or
- said foil (20) of ethylene copolymer bitumen (ECB) having a thickness in the range of 0.6-1.0mm, preferably 0.8mm, and/or
- said metal sheet (30) having a thickness in the range of 0.5-1.2mm.

21. Use of a foil (20) of ethylene copolymer bitumen (ECB) as an interface for bonding of a bituminous membrane (10) to metal sheet (30) by heating.
